# EUROPÄISCHE PATENTSCHRIFT

(11) **EP 1 200 008 B1**
(45) Veröffentlichungstag und Bekanntmachung des Hinweises auf die Patenterteilung: **23.02.2005**
(21) Anmeldenummer: 00956308.1
(22) Anmeldetag: 27.07.2000
(51) Int. Cl.: A61C 17/34, A61C 17/26

(54) **ZAHNBÜRSTE**
TOOTHBRUSH
BROSSE A DENTS

(30) Priorität: 28.07.1999 DE 19934805; 20.08.1999 DE 29914615 U; 25.11.1999 DE 19956689
(43) Veröffentlichungstag der Anmeldung: 02.05.2002
(73) Patentinhaber: WAHL GmbH, 78089 Unterkirnach (DE)
(72) Erfinder: NIEBERGALL, Martin, D-78050 Villingen-Schwenningen (DE); GÖTZ, Udo, D-78647 Trossingen (DE)
(74) Vertreter: Patentanwälte Westphal, Mussgnug & Partner
(86) Internationale Anmeldenummer: PCT/EP2000/007213
(87) Internationale Veröffentlichungsnummer: WO 2001/006947

(56) Entgegenhaltungen:
- WO-A-98/36703
- DE-A- 19 627 752
- US-A- 5 577 285

## Beschreibung

Die Erfindung betrifft eine Zahnbürste mit einem von einem Bürstenkörper getragenen Bürstenkopf gemäß Oberbegriff des Anspruchs 1.

Zahnbürsten mit Exzenterantrieb sind in großer Zahl und in verschiedenen Ausführungsvarianten im Handel erhältlich.

Sie besitzen in der Regel einen Bürstenkopf, der von einem Bürstenkörper getragen und auswechselbar an einem elektrischen Handgerät angebracht ist. Der Bürstenkopf besitzt einen borstenaufnehmenden Borstenträger, der um eine Rotationsachse drehbar gelagert ist. Er ist von einem Exzenterantrieb reversierend drehend antreibbar und vollführt hierbei eine abwechselnd in beide Drehrichtungen weisende Rotationsbewegung mit einem bestimmten Rotationswinkel, der beispielsweise 130° betragen kann.

Bei einer weit verbreiteten, im Handel erhältlichen Zahnbürste, wird die Exzenterbewegung dadurch erzeugt, dass dem Antriebsmotor ein Exzentergetriebe nachgeschaltet ist. Dieses erzeugt eine reversierende Hubbewegung, die auf eine Mitnehmerstange übertragen wird. Die Mitnehmerstange durchsetzt den Bürstenkörper und greift mit ihrem abgewinkelten, in Bezug auf die Rotationsachse des Borstenträgers axial verlaufenden Ende in eine korrespondierende Bohrung am Borstenträger ein, wobei die Mitnehmerbohrung radial seitlich versetzt zur Rotationsachse angebracht ist. Auf diese Weise wird die reversierende Hubbewegung der Hubstange in eine reversierende Rotationsbewegung des Borstenkörpers umgesetzt. Derartige Exzenterantriebe für Zahnbürsten sind beispielsweise in den Druckschriften US 5,617,601 oder US 5,524,312 beschrieben.

In der WO 96/37 164 ist eine weitere Variante eines Exzenterantriebs für eine Zahnbürste beschrieben. Bei dieser Variante wird die umlaufende Drehbewegung des Antriebsmotors unmittelbar auf eine Antriebswelle übertragen, die den Bürstenkörper durchsetzt und ein gekröpftes Ende aufweist. Dieses gekröpfte Ende greift in eine korrespondierende Führungsnut am Borstenträger ein, wodurch dieser in eine reversierende Rotationsbewegung versetzt wird. Auf diese Weise lässt sich ein mechanisch einfach aufgebauter und verschleißarmer Antrieb realisieren. Auch ist der Platzbedarf äußerst gering, so dass sich ein schlanker und kompakter Aufbau des Gehäuses erreichen lässt.

Obwohl sich eine derartig reversierend angetriebene Zahnbürste dem Grunde nach bewährt hat, weist sie doch einige Nachteile auf. Inbesondere sind die Zahnreinigungseigenschaften einer solchen Zahnbürste weiter verbesserungsbedürftig.

Es ist bekannt, zur Verbesserung der Zahnreinigungseigenschaften eine die Rotationsbewegung überlagerte Bewegung vorzusehen. Basierend auf einem Exzenterantrieb sind beispielsweise in der WO 96/31171 oder der DE 44 33 914 Al derartige Zahnbürsten beschrieben, deren Borstenträger eine Art Schwenkbewegung vollzieht.

Es hat sich gezeigt, dass eine derartige Zahnbürste von den Zahnreinigungseigenschaften noch nicht optimal ist. Ferner ist der Aufbau vergleichsweise kompliziert.

Die US-A-5577285, von der die Erfindung ausgeht, offenbart eine Zahnbürste mit einem von einem Exzenterantrieb reversierend drehend antreibbaren, drehbar gelagerten Borstenträger. Die Antriebswelle des Exzenterantriebs steht im Wesentlichen orthogonal zur Rotationsachse des Borstenträgers. Die Antriebswelle trägt stirnseitig einen Exzenterzapfen, der in einer Führungsbohrung des Borstenträgers geführt ist. Der Borstenträger ist gemäß einem der Ausführungsbeispiele axial verschiebbar am Bürstenkopf gelagert. Die Antriebswelle rotiert reversierend, wobei dem Borstenträger eine der Rotationsbewegung überlagerte axiale Verschiebebewegung aufgeprägt wird. Die Amplitude (Hub) der axialen Verschiebebewegung des Borstenträgers wird hierbei von der axialen Komponente der Bewegung des Exzenterzapfens zwischen den beiden Umkehrpunkten der Antriebswelle bestimmt.

Der Erfindung lag daher das Problem zugrunde, eine Zahnbürste der eingangs genannten Art derart weiterzuentwickeln, dass die Amplitude der axialen Verschiebebewegung des Borstenträgers unabhängig von der axialen Komponente der Bewegung des Exzenterzapfens gewählt werden kann und allein aufgrund der Drehung des Borstenträgers erzeugt wird.

Das Problem wird bei einer Zahnbürste der eingangs genannten Art durch die kennzeichnenden Merkmale des Anspruchs 1 gelöst.

Vorteilhafte Ausführungsformen der Erfindung sind durch die Merkmale der Unteransprüche angegeben.

Die Erfindung basiert auf der Idee, die reversierende Rotationsbewegung des Borstenträgers zu nutzen, um über eine mit dem Bürstenkopf zusammenwirkende Führung eine zwangsgekoppelte axiale Verschiebebewegung des Bürstenkopfs zu realisieren.

Die überlagerte axiale Verschiebebewegung wird dadurch erzeugt, dass der Borstenträger zumindest eine Mitnehmernut aufweist, die längs eines Umfangsabschnittes und in axialer Richtung geneigt am Borstenträger angebracht ist. Korrespondierend hierzu ist am Bürstenkopf wenigstens ein Mitnehmerstift vorgesehen, der in die Mitnehmernut führend eingreift. Eine auf den Borstenkörper übertragene Rotationsbewegung führt damit zwangsgekoppelt zu einer axialen Verschiebebewegung, da die Mitnehmernut eine axiale Komponente aufweist. Es ist damit eine weitere Kulissenführung im Umfangsbereich des Borstenträgers realisiert, die sich konstruktiv einfach umsetzen lässt. Hierfür ist es an sich ausreichend, einen einzelnen Mitnehmerstift und korrespondierend hierzu eine einzige Mitnehmernut vorzusehen, wobei im Sinne einer kinematischen Umkehr die Anordnung von Mitnehmerstift und Mitnehmernut vertauscht werden kann.

Ebenso ist es möglich, zwei Mitnehmerstifte vorzusehen, die einander gegenüberliegend am Bürstenkopf angebracht sind. Dies führt zu einer reduzierten Belastung der Mitnehmerstifte und der Nut, da zum Erzeugen der Axialkraft zwei Kulissenführungen vorgesehen sind.

Gemäß einer weiteren Variante ist vorgesehen, dass die Führungsnut unmittelbar in den Borstenträger eingeformt ist. Der Exzenterzapfen greift direkt in diese Führungsnut ein und ist dabei zwischen einem vorderen und einem hinteren Umkehrpunkt hin und her bewegbar, so dass eine Kraftübertragung über die in axialer Richtung verlaufenden Seiten der Führungsnut stattfinden kann und der Borstenträger dabei reversierend antreibbar ist.

Diese Variante kommt mit einer geringen Anzahl an beweglichen Einzelbauteilen aus, ist daher geräuscharm und insbesondere für hochfrequente Anwendungen, sogenannte schnelllaufende Zahnbürsten, für deren Bezeichnung sich auch der Begriff Ultrasonic-Bürsten etabliert hat, geeignet. Bei derartigen Zahnbürsten rotiert die Exzenterwelle mit einer Drehzahl im Bereich zwischen 15000 bis 25000 Umdrehungen pro Minute. Bei derartig hohen Drehzahlen sind die Bauteile besonders hohen Belastungen ausgesetzt, die insbesondere auch durch die permanente Drehrichtungsumkehr des Bürstenkörpers bedingt sind. Es kommt deshalb darauf an, den Betrieb möglichst konstruktiv einfach zu halten, wie es durch die vorstehend beschriebenen Maßnahmen optimal gegeben ist.

Bei einer derartigen Ausführungsform ist es ohne zusätzliche konstruktive Maßnahmen möglich, dem Borstenträger zusätzlich zur oszillierenden rotierende Bewegung die axiale Verschiebebewegung aufzuprägen, welche zu dem eingangs dargelegten guten Zahnreinigungsergebnis führt.

Gemäß einer weiteren Variante ist vorgesehen, einen Kulissenstein axial an dem Borstenträger festzulegen. Der Kulissenstein weist eine Führungsnut auf, in die der Exzenterzapfen eingreift und in axialer Richtung zwischen einem vorderen und einem hinteren Umkehrpunkt hin- und herlaufen kann.

Eine weitere Variante sieht vor, den Kulissenstein in der Führungsnut axial verschieblich zu lagern. Der Kulissenstein weist eine Mitnehmerbohrung auf, in die der Exzenterzapfen eingreift. Der Kulissenstein wird somit durch den Exzenterzapfen zwischen einem vorderen und einem hinteren Umkehrpunkt innerhalb der im Borstenträger integrierten Führungsnut hinund hergeführt.

Allen Varianten mit Kulissenstein ist gemeinsam, dass der Kulissenstein und die korrespondierende Ausnehmung bzw. Führungsnut am Borstenträger derart gestaltet sind, dass eine der Rotationsbewegung des Borstenkörpers gegenläufige Rotations- bzw. Schwenkbewegung des Kulissensteins möglich ist, damit der darin eingreifende Exzenterzapfen keiner Biegebeanspruchung ausgesetzt ist.

Die Kulissensteine sind hierzu in aller Regel zylindrisch ausgestaltet, wodurch sich eine sichere Lagerung in der Ausnehmung bzw. Führungsnut ergibt. Eine bevorzugte Variante sieht vor, den Kulissenstein kugelförmig zu gestalten. Dies hat den Vorteil, dass die zwischen dem Kulissenstein und der Ausnehmung bzw. der Führungsnut auftretenden Reibungskräfte minimal sind.

Die Erfindung wird nachstehend näher anhand des in den Figuren dargestellten Ausführungsbeispiels erläutert. Es zeigen:
- Fig. 1: vergrößerte Schnittdarstellung eines Antriebs gemäß einer weiteren Ausführungsform der Erfindung;
- Fig. 2: vergrößerte Schnittdarstellung eines Antriebs gemäß einer weiteren Ausführungsform;
- Fig. 3: vergrößerte Schnittdarstellung eines Antriebs gemäß einer weiteren Ausführungsform;
- Fig. 4: vergrößerte Schnittdarstellung eines Antriebs gemäß einer weiteren Ausführungsform.

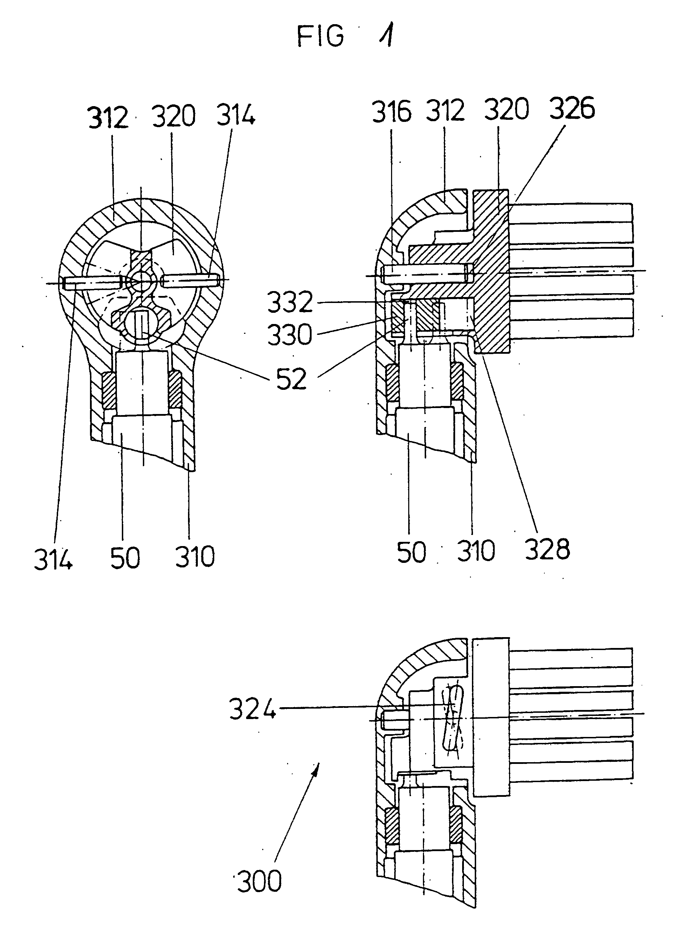

Fig. 1 zeigt eine Zahnbürste 300, bei der eine axiale Verschiebebewegung eines Borstenträgers 320 zwangsgekoppelt realisiert ist.

Es ist ein Bürstenkörper 310 mit einem Bürstenkopf 312 vorgesehen, der einen Lagerzapfen 316 aufweist. Dieser nimmt den Borstenträger 320'an einer Lagerbohrung 326 axial verschieblich auf.

Der Borstenträger 320 weist eine axiale Führungsnut 328 auf, in der ein Kulissenstein 330 axial verschieblich eingesetzt ist. Der Kulissenstein 330 besitzt eine Mitnehmerbohrung 332, in die ein Exzenterzapfen 52 einer Antriebswelle 50 eingreift.

Weiterhin sind am Bürstenkopf 312 zwei Mitnehmerstifte 314 eingesetzt, die einander gegenüberliegend und radial nach innen gerichtet angeordnet sind. Sie greifen in zwei korrespondierende Mitnehmernuten 324 ein, die am Borstenträger 320 längs eines Umfangsabschnittes angebracht sind. Sie sind in axialer Richtung etwas schräg geneigt verlaufend, so dass eine Rotationsbewegung des Borstenträgers 320 zu einer zwangsgekoppelten axialen Verschiebebewegung führt.

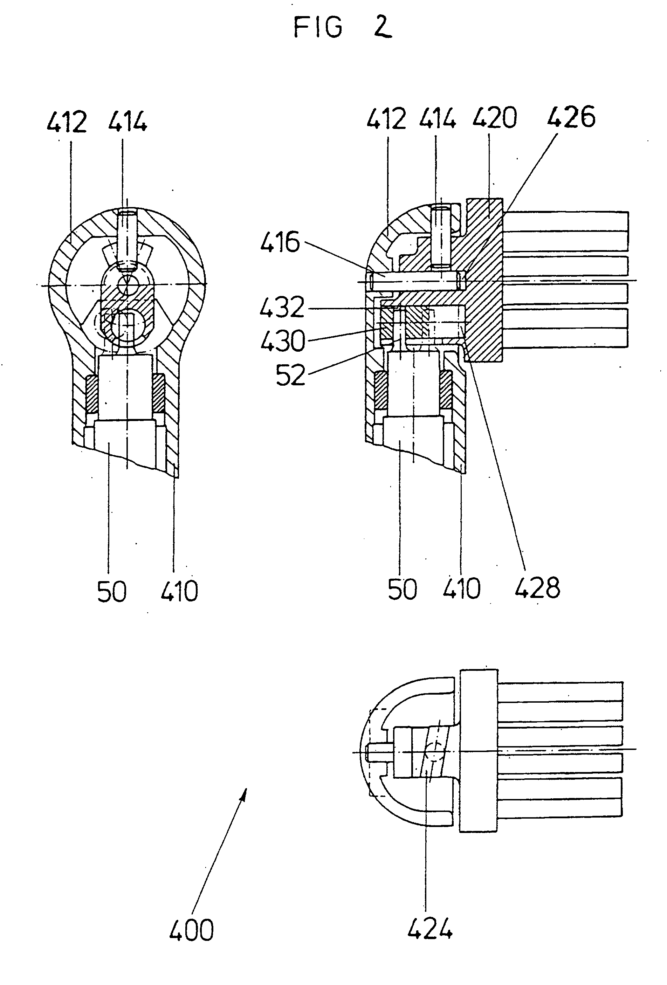

Die in Fig. 2 dargestellte Zahnbürste 400 ist in weitgehender Übereinstimmung mit der oben beschriebenen Variante ausgeführt.

Wiederum ist ein Bürstenkörper 410 mit einem Bürstenkopf 412 vorhanden, der mit einem Lagerzapfen 416 versehen ist. Der Borstenträger 420 ist über eine Lagerbohrung 426 auf dem Lagerzapfen 416 längsverschieblich gelagert.

Der Borstenträger 420 besitzt eine axiale Führungsnut 428, in der ein Kulissenstein 430 axial verschieblich gelagert ist. Der Kulissenstein 430 weist eine Mitnehmerbohrung 432 auf, in die ein Exzenterzapfen 52 an der Antriebswelle 50 eingreift.

Insoweit stimmt der grundsätzliche Aufbau mit der in Verbindung mit Fig. 1 beschriebenen Ausführungsvariante überein. Der Unterschied besteht nun darin, dass lediglich ein Mitnehmerstift 414 vorgesehen ist, der mit einer Mitnehmernut 424 zusammenwirkt. Die axiale Verschiebebewegung ergibt sich wiederum dadurch, dass die Mitnehmernut 424 in axialer Richtung etwas schräg geneigt verlaufend gestaltet ist, wodurch die axiale Hubbewegung des Borstenträgers 420 vorgegegeben ist.

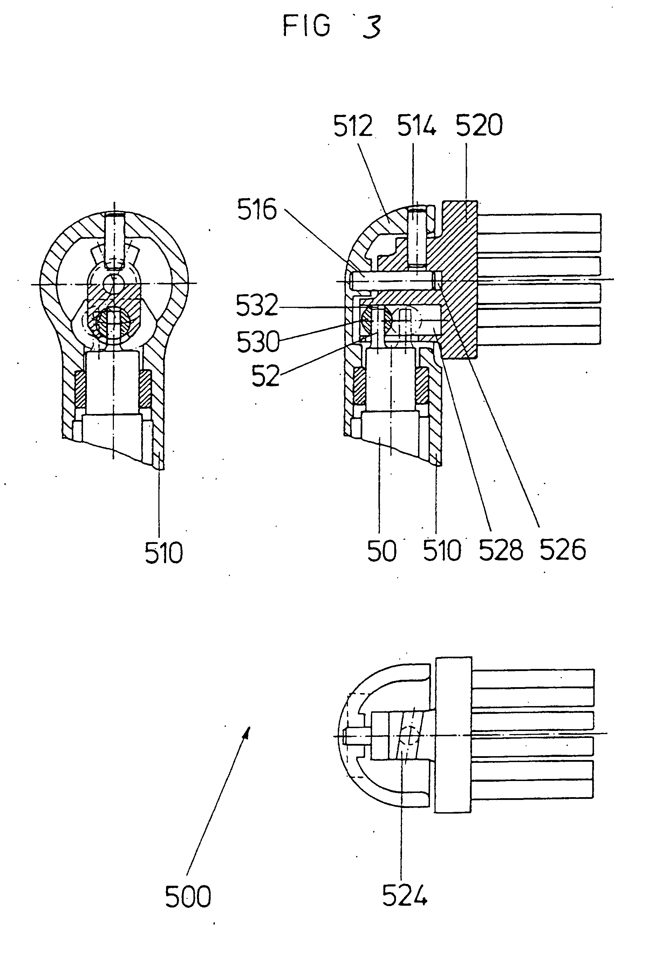

Die in Fig. 3 dargestellte Variante einer Zahnbürste 500 unterscheidet sich von der vorstehend beschriebenen lediglich dadurch, dass ein Kulissenstein 530 kugelförmig gestaltet ist. Er bestitzt eine Mitnehmerbohrung 532, in die ein Exzenterzapfen 52 an der Antriebswelle 50 im Eingriff ist.

Der Kulissenstein ist in einer axialen Führungsnut 528 eines Borstenträgers 520 axial verschieblich geführt. Der Borstenträger 520 weist eine Lagerbohrung 526 auf, über die er an einem Lagerzapfen 516 längs verschieblich geführt ist. Der Lagerzapfen 516 ist an einem Bürstenkopf 512 eines Bürstenkörpers 510 befestigt.

Am Bürstenkopf 512 ist ein Mitnehmerzapfen 514 angebracht, der mit einer korrespondierenden Mitnehmernut 524 derart zusammenwirkt, dass eine Rotationsbewegung des Borstenkörpers 520 zu einer zwangsgekoppelten axialen Hubbewegung des Borstenkörpers 520 führt.

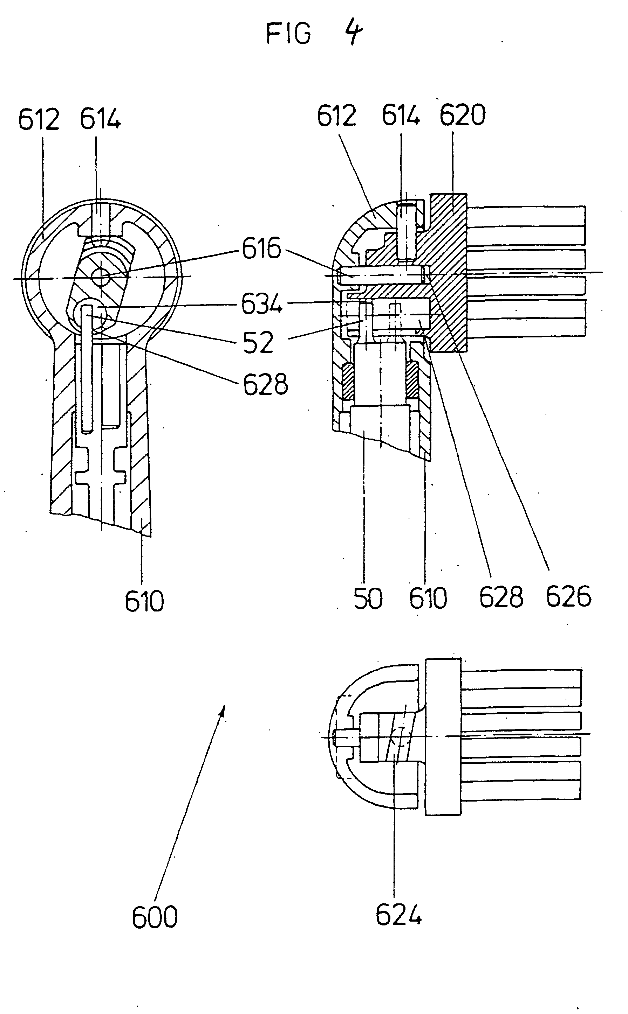

Die in Fig. 4 dargestellte Variante einer Zahnbürste 600 ist in weitgehender Übereinstimmung mit den in den Figuren 2 und 3 dargestellten Varianten.

Wiederum ist ein Bürstenkörper 610 mit einem Bürstenkopf 612 abgebildet, welcher mit einem Lagerzapfen 616 versehen ist. Der Borstenträger 620 ist über eine Lagerbohrung 626 auf dem Lagerzapfen 616 längsverschieblich gelagert.

Es ist, wie in den Figuren 2 und 3 bereits detailliert vorgestellt wurde, ein Mitnehmerstift 614 vorgesehen, der mit einer Micnehmernut 624 zusammenwirkt, welche in axialer Richtung etwas schräg geneigt verläuft. Hieraus ergibt sich die axiale Hubbewegung des Borstenträgers 620.

Insoweit stimmt der grundsätzliche Aufbau der dargestellten Zahnbürstenvariante mit den in Verbindung mit den Figuren 2 und 3 beschriebenen Ausführungsvarianten überein. Die in Fig. 4 dargestellte Variante einer Zahnbürste 600 unterscheidet sich lediglich dadurch, dass die Führungsnut 628 unmittelbar in den Borstenträger 620 eingeformt ist.

Der Exzenterzapfen 52, welcher von der Antriebswelle 50 motorisch in Rotationsbewegung versetzbar ist, greift direkt in diese Führungsnut 628 ein. Der Exzenterzapfen 52 bewegt sich infolge des motorischen Antriebs der Antriebswelle 50 frei in der Führungsnut 628 zwischen einem vorderen und einem hinteren Umkehrpunkt hin und her. Eine Kraftübertragung des Exzenterzapfens 52 auf den Borstenträger 620 erfolgt über die in axialer Richtung verlaufenden Seiten der Führungsnut 628. Damit der in der Führungsnut 623 eingreifende Exzenterzapfen 52 keiner Biegebeanspruchung ausgesetzt ist, weist die Führungsnut 628 in radialer Richtung nach innen einen Hohlraum 634 auf, welcher das freie Ende des Exzentrerzapfens 52 beabstandet von der Innenwandung des Hohlraums 634 aufnimmt.

### Bezugszeichenliste

- 300: Zahnbürste
- 310: Bürstenkörper
- 312: Bürstenkopf
- 314: Mitnehmerstift
- 316: Lagerzapfen
- 320: Borstenträger
- 324: Mitnehmernut
- 326: Lagerbohrung
- 328: Führungsnut
- 330: Kulissenstein
- 332: Mitnehmerbohrung

- 400: Zahnbürste
- 410: Bürstenkörper
- 412: Bürstenkopf
- 414: Mitnehmerstift
- 416: Lagerzapfen
- 420: Borstenträger
- 424: Mitnehmernut
- 426: Lagerbohrung
- 428: Führungsnut
- 430: Kulissenstein
- 432: Mitnehmerbohrung

- 500: Zahnbürste
- 510: Bürstenkörper
- 512: Bürstenkopf
- 514: Mitnehmerstift
- 516: Lagerzapfen
- 520: Borstenkörper
- 524: Mitnehmernut
- 526: Lagerbohrung
- 528: Führungsnut
- 530: Kulissenstein
- 532: Mitnehmerbohrung

- 600: Zahnbürste
- 610: Bürstenkörper
- 612: Bürstenkopf
- 614: Mitnehmerstift
- 616: Lagerzapfen
- 620: Borstenkörper
- 624: Mitnehmernut
- 626: Lagerbohrung
- 628: Führungsnut
- 634: Hohlraum

## Patentansprüche

1. Zahnbürste mit einem von einem Bürstenkörper (310; 410; 510; 610) getragenen Bürstenkopf (312; 412; 512; 612), welcher
- einen Borsten aufnehmenden Borstenträger (320; 420; 520; 620) aufweist, der um eine Rotationsachse drehbar gelagert und von einem Exzenterantrieb (50, 52) reversierend drehend antreibbar ist, wobei
- der Exzenterantrieb eine Antriebswelle (50) aufweist, die orthogonal zur Rotationsachse des Borstenträgers (320; 420; 520; 620) und den Bürstenkörper (310; 410; 510; 610) zentral durchsetzend angeordnet ist und die stirnseitig einen Exzenterzapfen (52) trägt, wobei
- der Borstenträger (320; 420; 520; 620) eine in axialer Richtung verlaufende Führungsnut (328; 428; 528; 628) aufweist, in der der Exzenterzapfen (52) geführt ist,
- der Borstenträger (320; 420; 520; 620) axial verschieblich am Bürstenkopf (312; 412; 512; 612) gelagert ist und von dem Exzenterantrieb (50, 52) reversierend linear hin- und herbewegend antreibbar ist,
**dadurch gekennzeichnet,**
- **dass** die Antriebswelle (50) in einer Richtung umlaufend ist,
- **dass** der Borstenträger (320; 420; 520; 620) wenigstens eine Mitnehmernut (324; 424; 524; 624) aufweist, die längs eines Umfangsabschnittes und in axialer Richtung geneigt am Borstenträger (320; 420; 520; 620) angebracht ist, und
- **dass** am Bürstenkopf (312; 412; 512; 612) wenigstens ein Mitnehmerstrift (314; 414; 514; 614) angebracht ist, der in die Mitnehmernut (324; 424; 524; 624) führend im Eingriff ist.

2. Zahnbürste nach Anspruch 1,
**dadurch gekennzeichnet,**
**dass** zwei Mitnehmerstifte (314) vorgesehen sind, die einander gegenüberliegend am Bürstenkopf (310) angebracht sind.

3. Zahnbürste nach Anspruch 1 oder 2,
**dadurch gekennzeichnet,**
**dass** die Führungsnut (628) unmittelbar in den Borstenträger (620) eingeformt ist.

4. Zanbürste nach Anspruch 1 oder 2,
**dadurch gekennzeichnet,**
**dass** die Führungsnut Bestandteil eines Kulissensteins ist, der axial am Borstenträger festgelegt ist.

5. Zahnbürste nach Anspruch 1 oder 2,
**dadurch gekennzeichnet,**
- **dass** ein Kulissenstein (330; 430; 530) in der Führungsnut (328; 428; 528) axial verschieblich gelagert ist und
- **dass** der Kulissenstein (330; 430; 530) eine Mitnehmerbohrung (332; 432; 532) aufweist, in die der Exzenterzapfen (52) eingreift.

6. Zahnbürste nach Anspruch 4 oder 5,
**dadurch gekennzeichnet,**
**dass** der Kulissenstein (330; 430) zylinderförmig gestaltet ist.

7. Zahnbürste nach Anspruch 4 oder 5,
**dadurch gekennzeichnet,**
**dass** der Kulissenstein (530) kugelförmig gestaltet ist.

## Claims

1. Toothbrush comprising a brush head (312; 412; 512; 612) supported by a brush body (310; 410; 510; 610), which brush head
- has a bristle-carrying bristle carrier (320; 420; 520; 620), said bristle carrier being mounted such that it can rotate about an axis of rotation and it being possible for said bristle carrier to be reversibly rotatably driven by an eccentric drive (50, 52), wherein
- the eccentric drive has a drive shaft (50) which is arranged orthogonal to the axis of rotation of the bristle carrier (320; 420; 520; 620) and such that it passes centrally through the brush body (310; 410; 510; 610) and has an eccentric pin (52) on the end face, wherein
- the bristle carrier (320; 420; 520; 620) has a guide channel (328; 428; 528; 628) which runs in the axial direction and in which the eccentric pin (52) is guided,
- the bristle carrier (320; 420; 520; 620) is mounted on the brush head (312; 412; 512; 612) such that it can be displaced in the axial direction and can be reversibly driven back and forth in a linear manner by the eccentric drive (50, 52),
**characterized**
- **in that** the drive shaft (50) rotates in one direction,
- **in that** the bristle carrier (320; 420; 520; 620) has at least one drive-pin channel (324; 424; 524; 624) which is disposed on the bristle carrier (320; 420; 520; 620) along a circumferential section and such that it is inclined in the axial direction, and
- **in that** at least one drive pin (314; 414; 514; 614) is disposed on the brush head (312; 412; 512; 612), said drive pin being guidingly engaged in the drive-pin channel (324; 424; 524; 624).

2. Toothbrush according to Claim 1, **characterized in that** two drive pins (314) are provided which are disposed on the brush head (310) such that they lie opposite one another.

3. Toothbrush according to Claim 1 or 2, **characterized in that** the guide channel (628) is formed directly in the bristle carrier (620).

4. Toothbrush according to Claim 1 or 2, **characterized in that** the guide channel is part of a sliding block which is axially fixed on the bristle carrier.

5. Toothbrush according to Claim 1 or 2, **characterized**
- **in that** a sliding block (330; 430; 530) is mounted in the guide channel (328; 428; 528) such that it can be displaced in the axial direction, and
- **in that** the sliding block (330; 430; 530) has a drive-pin bore (332; 432; 532) in which the eccentric pin (52) engages.

6. Toothbrush according to Claim 4 or 5, **characterized in that** the sliding block (330; 430) has a cylindrical shape.

7. Toothbrush according to Claim 4 or 5, **characterized in that** the sliding block (530) has a spherical shape.

## Revendications

1. Brosse à dents, comprenant une tête de brosse (312 ; 412 ; 512 ; 612) portée par un corps de brosse (310 ; 410 : 510 ; 610),
dans laquelle
- un support de soie (320 ; 420 ; 520 ; 620) recevant la soie peut tourner autour d'un axe de rotation et être entraîné en rotation réversible par un système à excentrique (50, 52),
- la commande par excentrique présente un arbre d'entraînement (50) perpendiculaire à l'axe de rotation du support de soie (320 ; 420 ; 520 ; 620) et traverse centralement le corps de brosse (310 ; 410 ; 510 ; 610) pour supporter un cône d'excentrique (52) sur la face frontale,
- le support de soie (320 ; 420 ; 520 ; 620) présente une rainure de guidage (328 ; 428 ; 528 ; 628) s'étendant cans la direction axiale et qui guide le cône d'excentrique (52),
- le support de soie (320 ; 420 ; 520 ; 620) mobile axialement sur la tête de brosse (312 ; 412 ; 512 ; 612) peut être entraîné dans un mouvement de va-et-vient linéaire par la commande par excentrique (50, 52),
**caractérisée en ce que**
- l'arbre d'entraînement (50) tourne dans une direction,
- le support de soie (320 ; 420 ; 520 ; 620) présente au moins une rainure d'entraînement (324 ; 424 ; 524 ; 624) pratiquée sur le support de soie (320 ; 420 ; 520 ; 620) le long d'une partie de la circonférence et courbée en direction axiale, et
- au moins une cheville d'entraînement (314 ; 414 ; 514 ; 614) montée sur la tête de brosse (312 ; 412 ; 512 ; 612) s'engage dans la rainure d'entraînement (324 ; 424 ; 524 ; 624).

2. Brosse à dents selon la revendication 1,
**caractérisée en ce que**
deux chevilles d'entraînement (314) sont montées sur la tête de brosse (310) l'une en face de l'autre.

3. Brosse à dents selon la revendication 1 ou 2,
**caractérisée en ce que**
la rainure de guidage (628) est directement formée dans le support de soie (620).

4. Brosse à dents selon la revendication 1 ou 2,
**caractérisée en ce que**
la rainure de guidage est un composant d'un coulisseau fixé axialement sur le support de soie.

5. Brosse à dents selon la revendication 1 ou 2,
**caractérisée en ce que**
- un coulisseau (330 ; 430 ; 530) est monté mobile axialement dans la rainure de guidage (328 ; 428 ; 528) et
- le coulisseau (330 ; 430 ; 530) présente un alésage d'entraînement (332 ; 432 ; 532) dans lequel s'engage le cône d'excentrique (52).

6. Brosse à dents selon la revendication 4 ou 5,
**caractérisée en ce que**
le coulisseau (330 ; 430) est de forme cylindrique.

7. Brosse à dents selon la revendication 4 ou 5,
**caractérisée en ce que**
le coulisseau (530) est de forme sphéroidale.
